# EUROPEAN PATENT APPLICATION

(11) **EP 4 578 782 A1**
(43) Date of publication of application: **02.07.2025**
(21) Application number: 24221760.2
(22) Date of filing: 19.12.2024
(51) Int. Cl.: B64C 23/06

(54) **ADJUSTABLE FLOW INFLUENCING ASSEMBLY FOR AN AIRCRAFT**

(30) Priority: 27.12.2023 NL 2036683
(71) Applicant: Technische Universiteit Delft, 2628 CN Delft (NL); AIRBUS Operations GmbH, 21129 Hamburg (DE)
(72) Inventor: SODJA, Jurij, DELFT (NL); STEFES, Bruno, HAMBURG (DE); EBERLE, Adrian, HAMBURG (DE); MARINO, Luca, DELFT (NL); KIAT, Ilias, DELFT (NL)
(74) Representative: Algemeen Octrooi- en Merkenbureau B.V.

(57) **Abstract**

The invention relates to an adjustable flow influencing assembly (2) for an aircraft, comprising:
a vortex generator body (12) having a length (l) and a width (w) dimension,
a positioning device (14) adapted to rotate and arrest the vortex generator body (12) in a way that the orientation relative to a main airflow direction is selectively adjustable, the vortex generator body (12) having two sections (12a, 12b) along the length (l) dimension,
wherein a size (S1) of a first (12a) of the two sections (12a, 12b) differs, wherein, before deployment, the section (12a) having the largest size (S1) is to point upstream, whereas the section (12b) having the smallest size (S2) is to point downstream, or is adjustable to differ, from a size (S2) of a second (12b) of the two sections (12a, 12b).

## Description

### Technical field

The invention relates to an adjustable flow influencing assembly for an aircraft, a method for influencing a flow at an aircraft as well as an aircraft having such an adjustable flow influencing assembly.

### Background of the invention

Modern commercial and transport aircraft often comprise an elaborate design that leads to a highly efficient aerodynamic behavior in various different flight conditions. One of many measures to increase the efficiency lies in the provision of local vortex generators, which are able to produce vortices locally for keeping an airflow attached to the aircraft outer surface, such as a wing surface, a rudder surface or the like. It is also well known to use movable vortex generators, which can be retracted to a neutral position in case they are temporarily not needed.

For example, DE 10 2007 027 697 B4 shows a fixed vortex generator assembly on an engine nacelle for improving the aerodynamic characteristics of the aircraft in particular in flight phases with larger angles of attack.

EP 3 176 082 A1 discloses vortex generators intended to function as stall-prevention and flow actuation devices, which can be deployed when needed (e.g. if a greater aerodynamic efficiency of the rudder is required). The vortex generators are deployed by a spring-loaded mechanism (or similar) when needed and can assume any pre-set angular position governed by the motion limits. Once the vortex generators are deployed they cannot be stowed away ("undeployed") in flight and they must be manually undeployed on the ground.

Likewise the deployment of spoilers at a wing surface to generate local flow separation is a well-known method for specific flight conditions, such as during a gust encounter, as a maneuver loads alleviation device, or for roll control and steep descent.

The installation of retractable vortex generators and spoilers is complex and increases the manufacturing and maintenance costs.

### Summary of the invention

It is an object of the invention to propose an alternative flow influencing device that is simple to install and easy to maintain, while the manufacturing costs are reduced and the improvements of the aerodynamic effect are at least maintained.

This object is met by an adjustable flow influencing assembly for an aircraft having the features of independent claim 1.

Advantageous embodiments and further improvements may be gathered from the subclaims and the following description.

An adjustable flow influencing assembly for an aircraft is proposed, comprising an outer skin section of the aircraft, which has an external surface that is in contact with an air flow during operation of the aircraft, and an internal surface, at least one vortex generator body having a length and a width dimension, as well as a thickness, at least one positioning device arranged at the internal surface of the outer skin section, wherein the at least one positioning device comprises a shaft rotatable about a rotational axis, wherein the at least one vortex generator body is arranged on the external surface and is coupled with the shaft, such that the rotational axis is substantially parallel to a plane spanned up by the length and width dimension of the at least one vortex generator body, and wherein the at least one positioning device is adapted to rotate and arrest the at least one vortex generator body in a way that the orientation of the at least one vortex generator body relative to a main airflow direction on the exterior skin is selectively adjustable,
wherein the at least one vortex generator body and the at least one positioning device are arranged relative to each other in a way that the rotational axis extends along a division line that divides the at least one vortex generator body into two sections along the length dimension and that is parallel to the width dimension,
a) wherein a size of a first of the two sections differs from a size of a second of the two sections, wherein, before employment, the section having the largest size is to point upstream, whereas the section having the smallest size is to point downstream, and/or
b) wherein the at least one vortex generator body and the at least one positioning device are coupled to each other in a way that the size of the two sections can be adjusted, preferably along the length dimension, to allow the size of the first of the two sections to differ from the size of the second of the two sections.

A gist of the invention lies in providing a multi-purpose device, with which the functionality of a retractable vortex generator and of a retractable spoiler are combined. This opens the opportunity to use the same device in different ways, depending on the specific flight conditions of the aircraft at that moment. Hence, each vortex generator body may selectively act as a deployable vortex generator, for delaying or suppressing flow separation and hence lift enhancement for high or low speed conditions, potentially also for buffet control in high speed conditions.

Also, the respective vortex generator may be used for management of flow induced separations causing vibrations or source noise. Also, each vortex generator body may act as a spoiler device to trigger flow separation in specific conditions, such as a load control device for sizing loads cases, but also potentially to increase emergency descent capabilities. In particular this may become more relevant for high aspect ratio wing design, in high altitude and high lift to drag ratio level, as well as for roll control when activating in an asymmetric way between a left and a right wing of an aircraft. Each of the vortex generator bodies, however, may be brought into a neutral position, in which it has a negligible impact on the outer flow and the corresponding aircraft drag, which will allow for increased geometrical dimensions of the devices, making the devices more effective.

Thus, an aerodynamic solution to both stall prevention in a low-speed regime as well as aerodynamic load alleviation in the high-speed regime, for example in the case of gust encounters or manoeuvring, is provided. In the case of stall prevention, the vortex generator is rotated such as to induce streamwise vortices over the wing which prevent flow separation from the wing surface thereby delaying the stall onset.

In the case of load alleviation the vortex generator is rotated to the point that the vortex generator causes flow separation which results in reduced local aerodynamic lift.

The advantage of the abovementioned vortex generator is that the vortex generator can be deployed on demand only when its functionality is required. For the remaining part of the operational time, the vortex generator can be maintained in an aerodynamically neutral position to allow for optimal aerodynamic performance in terms of minimal drag penalty.

The advantage of the above concept is its mechanical simplicity and actuation mechanism based on readily available commercial-off-the-shelf components, which significantly simplify and de-risk the maturation of the concept. In addition, the proposed concept allows for modularization which can be exploited to develop a self-contained vortex generator unit with a minimal required interface to the HARW to simplify the integration and maintenance of such devices in a real-life application.

According to the invention, the vortex generator may utilize a "passive" deployment mechanism for the purpose of aerodynamic load alleviation to reduce the response time of such devices to aerodynamic disturbances such as impinging gusts. This passive deployment is effectuated by having the size of the first of the two sections differ from the size of the second of the two sections before employment, wherein the section having the largest size is to point upstream, whereas the section having the smallest size is to point downstream, to allow for effective passive deployment, and/or by coupling the at least one vortex generator body and the at least one positioning device to each other in a way that the size of the two sections can be adjusted, preferably along the length dimension, to allow the size of the first of the two sections to differ from the size of the second of the two sections, allowing for an aerodynamic moment to be exerted on the at least one vortex generator body by the airflow.

The vortex generator may be reset to its neutral position by the baseline actuation mechanism (i.e. the positioning device) pertinent to the vortex generator once the aerodynamic disturbance is over.

The outer skin section of the aircraft may refer to any part of the aircraft that is external and thus is in contact with the airflow. It may be a part of an upper skin, a forward skin, or a bottom skin part of the wing; a boundary surface of a rudder; any part of a horizontal or vertical tail plane, of a fairing or the like.

The vortex generator body is an element that protrudes outwards from the outer skin section into the surrounding airflow. It always remains outside the outer skin section and is preferably slightly distanced to the external surface to avoid scratching the external surface when rotated. For example, a gap of 0.1 to 1 mm or slightly more may be provided between the vortex generator body and the external surface. The vortex generator body does not influence the airflow at all if it is aligned parallel to the main airflow direction. It may be a substantially flat body. It may also be slightly curved and/or wedge-shaped. It may comprise a substantially rectangular shape in general, but may also have rounded corners and/or rounded edges. However, it may also have a tapered shape, a trapezoidal shape, a triangular shape, and/or a curved shape.

The at least one positioning device may be considered an actuator that actively and/or passively (allows to) rotate(s) the vortex generator body to change its orientation relative to the main airflow direction. By this, the influence of the vortex generator body onto the airflow can be altered upon desire. For example, it may only be slightly rotated away from the neutral position to only produce vortices downstream the vortex generator body. However, by a stronger deflection relative to the main airflow direction, it may also act as a spoiler to actively trigger flow detachment.

The main airflow direction may correspond to a reference line on the external surface 6, which has an orientation that may change depending on the flight condition, including the velocity and the angle of attack. It is conceivable that the at least one positioning device comprises or is connected to a control unit that is capable of tracking the main airflow direction, such that the neutral position of the at least one vortex generator body automatically corresponds to the actual main airflow direction.

The at least one positioning device comprises a shaft that points to the outer skin section and, preferably, to an external side of the outer skin section. It may protrude through an opening in the outer skin section or it may end in the vicinity of such an opening before protruding through it. The vortex generator body is coupled with the shaft either directly or through another element arranged between the shaft and the vortex generator body.

It is conceivable that the at least one positioning device is capable of not only rotating the vortex generator body into a desired rotation or position, but also to maintain this position. This may be conducted by providing the at least one positioning device as a step motor and/or having a reduction gear, which in combination with the motor can be dimensioned to exert a sufficient force onto the vortex generator body to compensate the aerodynamic forces acting onto the vortex generator body. However, also a separate arresting or locking device may be provided in addition to a motor. By simply providing a rotary motion, the assembly is simple and the shaft and/or the vortex generator body can easily be sealed against the outer skin section to avoid dirt and humidity to enter the at least one positioning device or the interior of the respective aircraft component. The design of the multi-purpose assembly makes it robust against adverse ambient conditions like snow, rain, or dust. It is moreover conceivable that the at least one positioning device allows the vortex generator body to freely rotate into the desired rotation or position. The assembly may comprise an endstop to prevent the vortex generator from rotating past a certain position, in particular the third position used for load alleviation (as will be explained later). The assembly may comprise a clutch or the like, such as a magnetic clutch, to release the vortex generator body ("clutch open") to allow the vortex generator body to freely rotate. When the clutch is engaged ("clutch closed") the positioning device may be used to rotate the vortex generator body or to maintain a selected position, such as the first, second or third position (as will be explained later).

US 2 896 880 A discloses a wing having an upper and a lower surface together with a leading and a trailing edge. A lateral control means for the wing is provided comprising a plurality of vane means distributed along the upper surface of said wing to be operable when actuated to substantially decrease the major portion of the lift forces acting upon said wing in flight. Each of the vane means comprises a vane having its front and aft edges located between the wing trailing and leading edges, and means secured to the vane mounting the latter for rotary motion about an axis approximately normal to the upper surface of said wing. The largest size of the vane according to US 2 896 880 A, however, points downstream, whereas, according to the invention, the largest size of the vane is to point upstream, to allow for effective passive deployment.

US 2020/369364 A1 discloses an adaptable multi-segment chine for use with an aircraft engine nacelle, including a first segment and a second segment, wherein the first segment is fixedly coupled to the nacelle. The second segment is rotatable relative to the first segment about an axis of rotation, wherein the axis of rotation is substantially perpendicular to a local area of an outer surface of the nacelle. The largest size of the chine according to US 2020/369364 A1, however, also points downstream, whereas, according to the invention, the largest size of the "chine" is to point upstream, to again allow for effective passive deployment.

In an exemplary embodiment, the at least one vortex generator body is coupled with the shaft in a way that the at least one vortex generator body can translate with respect to the shaft along the length dimension. Thus, the ratio between the first size and the second size may be selectively adjusted, and the aerodynamic moment acting on the at least one vortex generator body may be influenced.

In an exemplary embodiment, the at least one vortex generator body is coupled with the shaft in a way that the at least one vortex generator body can translate with respect to the shaft along the length dimension by means of sliding.

An exemplary embodiment concerns an aforementioned assembly,
a) wherein the size of the first of the two sections is > 50%, preferably 60% - 80%, of the combined size of the two sections and/or
b) wherein the size of the two sections can be adjusted, preferably along the length dimension, such that the size of the first of the two sections is > 50%, preferably 60% - 80%, of the combined size of the two sections.

It is thus conceivable that the vortex generator body connects to the shaft at a longitudinal end of the vortex generator body. The size of the first section may thus be 100% of the combined size of the two sections and the size of the second section is thus effectively 0 then. When the width dimension is constant, the above numbers may be applied to the length dimension.

In an exemplary embodiment, the at least one positioning device is adapted to allow the at least one vortex generator body to freely rotate due to aerodynamic forces exerted on the at least one vortex generator body by the airflow. An endstop may be provided to stop rotation of the vortex generator body past a desired or maximum position, such as the third position.

In an advantageous embodiment, the rotational axis is parallel to the width dimension and perpendicular to the length dimension of the vortex generator body.

Thus, the longest side of the vortex generator body runs along the outer skin section, while the width dimension runs perpendicularly to the external surface. By providing the rotational axis to be parallel to the width dimension, the vortex generator body rotates about an axis that is parallel to the shortest side of the main vortex generator body surface.

In an exemplary embodiment, the at least one vortex generator body has a substantially constant thickness. The thickness may be as small as possible to reduce the impact on the airflow in the neutral position. The smallest possible thickness depends on the size of the vortex generator body, which should be a rigid component that effectively influences the flow in a desired way without having a tendency to flutter or bend. The thickness also depends on the used material and may be chosen by a skilled person. It is conceivable to use an aluminium alloy, titanium or CFRP.

In an alternative embodiment, the at least one vortex generator body has a substantially non-constant thickness, e.g. the vortex generator body could have an airfoil shape to ensure a preferential direction of rotation when allowed to rotate freely.

In an exemplary embodiment, the at least one positioning device is adapted to rotate the shaft about 90 degrees at a maximum. In this position, the vortex generator body may be arranged perpendicularly to the main airflow direction. By limiting the degree of rotation, a simple design of a seal between the vortex generator body and the outer skin section is possible, since a seal body may only need to be deformed about 45°into two opposed directions, which may allow to use a simple and fixedly attached bellows.

However, when using the passive deployment mechanism, with the largest-size section pointing upstream and the smallest-size section pointing downstream before deployment, the maximum rotation may even be 180 degrees, as the skilled person will understand, e.g. when the vortex generator body is to be fully aligned with the airflow after deployment.

In an exemplary embodiment, the at least one positioning device comprises an electric motor and a control unit. Thus, the at least one positioning device is simple to operate. The control unit may be connected to the electric motor and may exemplarily be coupled with a network or a bus of the aircraft to receive a command, which initiates a rotation of the at least one positioning device into a desired rotary position.

In an exemplary embodiment, the assembly is adapted to move the at least one vortex generator body into a first position corresponding to a neutral position that substantially does not influence the airflow, into a second position, in which the vortex generator body acts as a vortex generator and into a third position, in which the vortex generator body acts as a spoiler, wherein in the first position a main airflow direction and the vortex generator body enclose an angle of substantially 0°, wherein in the second position the main airflow direction and the vortex generator body enclose an angle in a range of 15° to 45° and preferably of 20° to 30°, and wherein in the third position the main airflow direction and the vortex generator body enclose an angle of substantially 90°. Aligning the vortex generator body parallel to the main airflow direction results in having the smallest possible front surface, which has an area that equals the thickness of the vortex generator body multiplied with the width of the vortex generator body. When the vortex generator body is a flat component, the airflow is substantially not influenced in the first position, which may also be referred to as the neutral position. In the second position, the vortex generator body only slightly extends into the main airflow, which is deflected along the vortex generator body and form vortices downstream the vortex generator body. However, in the third position, the main airflow directly impinges perpendicularly to the vortex generator body and thus is strongly influenced.

In an exemplary embodiment, the assembly is adapted to allow the at least one vortex generator body to freely rotate from the first position into the second or third position due to the aerodynamic forces exerted on the at least one vortex generator body by the airflow.

In an advantageous embodiment, the assembly comprises a plurality of vortex generator bodies arranged at a distance to each other, which are couplable with the at least one positioning device. Thus, extended local regions may be equipped with flow influencing vortex generator bodies, which may be moved synchronously or in groups, depending on the local flow conditions and the required effect of the assembly according to the invention.

In an advantageous embodiment, at least one first group of the vortex generator bodies is movable independently from at least one second group of the vortex generator bodies. Thus, only a part of the vortex generator bodies may be moved at the same time, if desired. For example, every second or every vortex generator body may be moved or only a half or a third of the vortex generator bodies may be moved at the same time in certain conditions.

In an advantageous embodiment, the assembly further comprises at least one flow sensor arrangeable on the external surface and couplable with the at least one positioning device, wherein the at least one flow sensor is adapted to measure at least one flow parameter on the external surface, and wherein the positioning device is adapted to move the at least one vortex generator body to influence the airflow upon receiving predetermined sensor data from the at least one flow sensor. In general, the control of the assembly may or should be carried out by a flight computer of the aircraft. Using local flow sensors installed near to the at least one vortex generator body would provide for example information about the area or extent of flow separation on the respective aircraft component, such as the wing. As a result, vortex generators may be activated to prevent flow separation. This may also include selecting a suitable number of vortex generator bodies to be moved, if several vortex generator bodies are present.

It is also conceivable that a part of the vortex generator bodies, if several vortex generator bodies are installed, may act as a spoiler, wherein another part of the vortex generator bodies may act as a vortex generator, in certain temporal flow conditions and depending on the position of the installation at the aircraft. In analogy to the above, the invention further relates to a method for influencing an airflow on an outer skin section of an aircraft, the outer skin section having a external surface and an internal surface, wherein at least one vortex generator body is arranged on the external surface and is coupled with a shaft of a positioning device arranged at the internal surface of the outer skin section and comprising a rotational axis, wherein the rotational axis is substantially parallel to a plane spanned up by a length and width dimension of the vortex generator body, the method comprising rotating the vortex generator body into a first position, in which the vortex generator body is parallel to a main flow direction for temporarily not influencing the flow, and rotating the vortex generator body into at least one other position, in which the main flow direction and the vortex generator body enclose an angle larger than zero for temporarily influencing the flow,
wherein the at least one vortex generator body and the at least one positioning device are arranged relative to each other in a way that the rotational axis extends along a division line that divides the at least one vortex generator body into two sections along the length dimension and that is parallel to the width dimension,
   a) wherein a size of a first of the two sections differs from a size of a second of the two sections, wherein, before employment, the section having the largest size is to point upstream, whereas the section having the smallest size is to point downstream, to allow for effective passive deployment, and/or
   b) wherein the at least one vortex generator body and the at least one positioning device are coupled to each other in a way that the size of the two sections can be adjusted, preferably along the length dimension, to allow the size of the first of the two sections to differ from the size of the second of the two sections,
further comprising adjusting the size of the two sections, preferably along the length dimension, in a way that the size of the first of the two sections differs from the size of the second of the two sections.

The at least one vortex generator body may be coupled with the shaft in a way that the at least one vortex generator body can translate with respect to the shaft along the length dimension,
wherein the method further comprises translating the at least one vortex generator body with respect to the shaft along the length dimension. The at least one vortex generator body may be coupled with the shaft in a way that the at least one vortex generator body can translate with respect to the shaft along the length dimension by means of sliding,
wherein the method further comprises translating the at least one vortex generator body with respect to the shaft along the length dimension by means of sliding.

As mentioned in the foregoing,
a) the size of the first of the two sections may be > 50%, preferably 60% - 80%, of the combined size of the two sections and/or
b) the size of the two sections can be adjusted, preferably along the length dimension, such that the size of the first of the two sections is > 50%, preferably 60% - 80%, of the combined size of the two sections,
wherein the method further comprises adjusting the size of the two sections, preferably along the length dimension, such that the size of the first of the two sections is > 50%, preferably 60% - 80%, of the combined size of the two sections.

The at least one positioning device may be adapted to allow the at least one vortex generator body to freely rotate due to aerodynamic forces exerted on the at least one vortex generator body by the airflow,
wherein the method further comprises allowing the at least one vortex generator body to freely rotate due to aerodynamic forces exerted on the at least one vortex generator body by the airflow.

In an advantageous embodiment, the at least one other position comprises a second position, in which the main airflow direction and the vortex generator body enclose an angle in a range of 15° to 45° and preferably of 20° to 30° to let the at least one vortex generator body act as a vortex generator, and wherein the at least one other position comprises a third position in which the main airflow direction and the vortex generator body enclose an angle of substantially 90° to let the at least one vortex generator body act as a spoiler.

In an exemplary embodiment, the at least one vortex generator body is allowed to freely rotate from the first position into the at least one other position due to the aerodynamic forces exerted on the at least one vortex generator body by the airflow.

The at least one other position may be the third position.

In an advantageous embodiment, the method further comprises measuring at least one flow parameter on the external surface through at least one flow sensor arranged on the external surface, and moving the at least one vortex generator body to influence the airflow upon receiving predetermined sensor data from the at least one flow sensor.

Still further, the invention relates to an aircraft, comprising at least one adjustable flow influencing assembly according to the above.

In an advantageous embodiment, the at least one adjustable flow influencing assembly is arranged on at least one position of a group of positions, the group comprising a wing in general, a forward region of a wing, an outboard portion of a wing, a vertical tail plane, a horizontal tail plane, a fairing, an engine nacelle, and a fuselage.

Studies have been performed on the aerodynamic performance of a high-aspect-ratio wing's outer section in transonic regime, focusing on the aerodynamic effects of changing the chord-wise position and height of the vortex generator body located on the airfoil upper surface in both nominal cruise conditions and for varying angles of attack. Analysis revealed that the vortex generator body can strongly affect the aerodynamic forces produced by the wing section, showing great potential for load alleviation and control. In cruise conditions, lift reduction increases with the vortex generator body width and has its maximum for chord-wise positions at about 50% - 70%, in particular about 60%, of the chord length. However, vortex generator bodies located in the first half of the chord-length yield more robust performance for varying angle of attack, without sharp lift variations or generated shock waves, and a delayed stall onset. Relatively large vortex generator body widths (≥ 3% chord-length) can also lead to strong shock waves on the airfoil lower surface at small or negative angle of attack, while relatively small vortex generator body widths (< 1% chord-length) can generate normal shock waves on the upper surface, with limited lift reduction in cruise conditions and at higher incidence.

### Brief description of the figures

In the following, the attached drawings are used to illustrate exemplary embodiments in more detail. The illustrations are schematic and not to scale. Identical reference numerals refer to identical or similar elements. They show:
Fig. 1 shows a schematical sectional view of an adjustable flow influencing assembly.
Fig. 2 shows a schematical top view of the assembly of Fig. 1.
Fig. 3a and 3b show sectional views of a wing having an assembly with a vortex generator body in a first position (Fig 3a) and a third position (Fig. 3b).
Fig. 4 shows a top view of a wing having a plurality of vortex generator bodies in first and third positions.
Fig. 5a and 5b show sectional views of a wing having an assembly with a vortex generator body in a first position (Fig 5a) and a second position (Fig. 5b) at high angles of attack.
Fig. 6 shows a top view of a wing having a plurality of vortex generator bodies in first and second positions.
Fig. 7 shows a shock-induced flow separation on a wing in a schematical lateral view.
Fig. 8 shows an assembly in a top view having a plurality of vortex generator bodies.
Fig. 9 shows an aircraft.

### Detailed description of exemplary embodiments

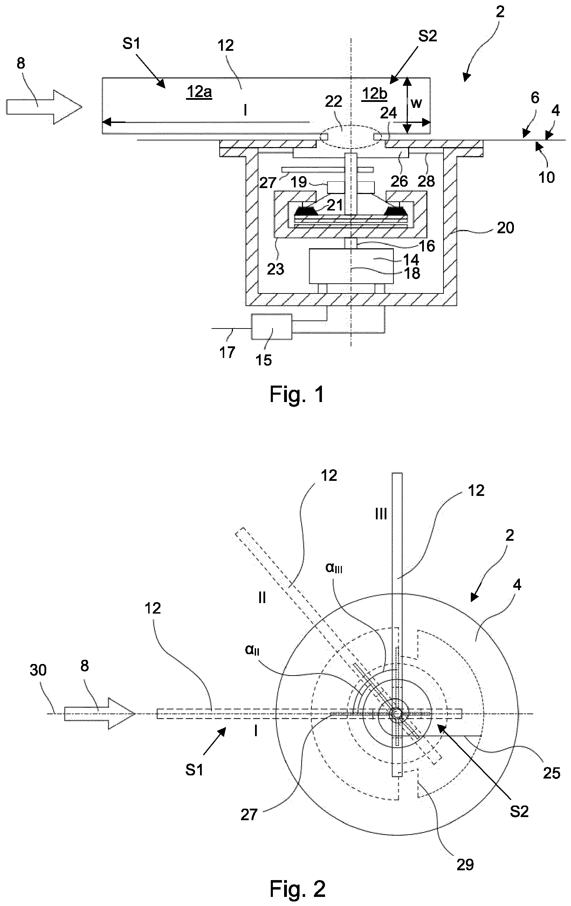

Fig. 1 shows an adjustable flow influencing assembly 2 for an aircraft. The assembly 2 comprises an outer skin section 4, which may be a part of the aircraft and is to be understood as a skin section on an outermost location of the aircraft, such as a part of the fuselage, of a wing, a horizontal tail plane, a vertical tail plane or a fairing on the outside of the aircraft. The outer skin section comprises an external surface 6, which is in contact with an airflow 8 during operation of the aircraft. The outer skin section 4 furthermore comprises an internal surface 10, which is most likely shielded from the airflow 8.

An exemplarily flat vortex generator body 12 is provided, which is arranged slightly above the external surface 6 and comprises a length dimension I and a width dimension w. In the present exemplary embodiment, the vortex generator body 12 perpendicularly extends to the external surface 6, such that the width dimension w extends perpendicularly to the external surface 6 and such that the length dimension I extends parallel to a local tangential surface of the external surface 6.

A positioning device 14 is provided in the form of an electric motor having a shaft 16, to which the vortex generator body 12 is coupled. The positioning device 14 furthermore exemplarily comprises a control unit 15, which has an input 17 to receive commands through a bus or network from a flight control computer. The control unit 15 is capable of controlling the positioning device 14 to move the vortex generator body 12 into a desired position given by the flight control computer depending on the actual flight conditions.

The shaft 16 comprises a rotational axis 18 and resultantly, the vortex generator body 12 can be rotated through the shaft 16. In this exemplary embodiment, the rotational axis 18 extends substantially parallel to the width dimension w and divides the vortex generator body 12 into two sections 12a and 12b along a division line, along the lengthwise dimension I. Thus, the rotational axis 18 runs parallel to the plane spanned up by the lengthwise and width-wise dimensions. By rotating the shaft 16, the vortex generator body 12 can selectively be brought into different orientations relative to the main airflow 8 to selectively influence the air flow over the outer skin section 4.

A size/surface area S1 of a first section 12a of the two sections 12a, 12b differs from a size/surface area S2 of a second section 12b of the two sections 12a, 12b. The first section 12a having the largest size S1 is to point upstream, whereas the second section 12b having the smallest size S2 is to point downstream, to allow for effective passive deployment.

The vortex generator body 12 and the positioning device 14 and/or shaft 16 may be coupled to each other in a way that the sizes S1, S2 of the two sections 12a, 12b can be adjusted, preferably along the length dimension I, to allow the size S1 of the first section 12a of the two sections 12a, 12b to differ from the size S2 of the second section 12b of the two sections 12a, 12b. The vortex generator body 12 may be coupled with the shaft 16 in a way that the vortex generator body 12 can translate with respect to the shaft 16 along the length dimension I, e.g. by means of a rack-and-pinion type arrangement or the like. Translation with respect to the shaft 16 along the length dimension I may also be achieved by means of sliding. Preferably, the size S1 of the first section S1 of the two sections 12a, 12b is (adjustable to) > 50%, such as 60% - 100% or 80% - 100%, preferably 60% - 80%, of the combined size S1+S2 of the two sections 12a, 12b.

In a preferred embodiment, the positioning device 14 is adapted to allow the vortex generator body 12 to freely rotate due to aerodynamic forces exerted on the at least one vortex generator body 12 by the airflow 8. The shaft 16 may be provided with a stop member 27 that rotates along with the vortex generator body 12 until a maximum rotation is achieved, wherein the stop member 27 is stopped by an endstop 29, in particular in the third position III, as will be explained below (in conjunction with Fig. 2).

The shaft 16 may also be provided with a clutch mechanism 23, in particular a magnetic clutch mechanism 23 (with magnets 21), such that the vortex generator body 12 may be selectively coupled or uncoupled (e.g. to allow free rotation) from the positioning device 14, in particular the electric motor. Other release mechanisms, clutch mechanisms or coupling/uncoupling mechanisms may also be used.

Exemplarily, the positioning device 14 is enclosed by a housing 20, which also acts as a mechanical support. The housing 20 is attached to the internal side 10 of the outer skin section 4, exemplarily by gluing, welding, riveting, or any other suitable attachment process depending on the material of the outer skin section 4. Preferably, the material of the enclosure 20 corresponds to the material of the outer skin section 4 to avoid different thermal engine behaviors.

Exemplarily, the vortex generator body 12 comprises a constriction 22 directly above an opening 24. A disk-like body 26 is connected to the shaft 16 and carries the vortex generator body 12 at the constriction 22. At the position of the constriction 22 a translating mechanism, such as a rack-and-pinion mechanism, may be provided to translate the vortex generator body 12 along the length dimension I. The disk-like body 26 is radially connected to a seal 28, which in turn is connected to the housing 20 or, alternatively, to the internal surface 10, for sealing the opening 24. It is conceivable, that the positioning device 14 is able to rotate about an angle of only up to 90°, although larger angles are conceivable, such as up to 180° with respect to the main airflow direction. The seal 28 may thus be realized by an elastic bellows that is fixedly connected to both the disk-like body 26 and the housing 20.

The vortex generator body 12 is a multifunctional device and can act as a vortex generator for delaying or suppressing flow separation or as a spoiler to trigger flow separation upon assuming a suitable orientation relative to the main airflow 8. This is shown in several following examples.

Fig. 2 shows the assembly 2 in a top view of the outer skin section 4. Here, the main airflow 8 is shown to run from the left-hand side to the right hand side in the viewing direction. The vortex generator body 12 is shown in three distinct and different positions I, II and III. Position I shows the vortex generator body 12 aligned parallel to a main flow direction 30 of the main airflow 8 and thus resembles a position of minimum impact. Thus, in this position, the vortex generator body 12 does not influence the airflow 8 on the aircraft outer skin section 4. In position II, the vortex generator body 12 and the main flow direction 30 enclose an angle α of about 45°. In this, the vortex generator body 12 acts as a vortex generator creating vortices on the external surface 6 downstream the vortex generator body 12. In position III, the vortex generator body 12 and the main flow direction 30 enclose an angle α of about 90° and thus acts as a spoiler to trigger flow separation locally.

It is to be understood, that the positioning device 14 is capable of not only moving vortex generator bodies 12 into the different positions one, two and three, but is also capable of holding the vortex generator bodies 12 there. For this, the positioning device 14 may include a locking device, which is not shown herein.

The positioning device 14 may also comprise a reduction gear that in combination with the electric motor itself is sufficient to lock the vortex generator body 12 in each of the assumed positions.

A spring 25 may also be provided, as shown in Fig. 2, to bias the vortex generator body 12 towards one of the three positions I, II, III. E.g. when the vortex generator body 12 is to freely rotate from the first position I to e.g. the second position II or the third position III, due to aerodynamic forces exerted on the vortex generator body 12, the spring 25 may bias the vortex generator body 12 towards the second position II and/or third position III.

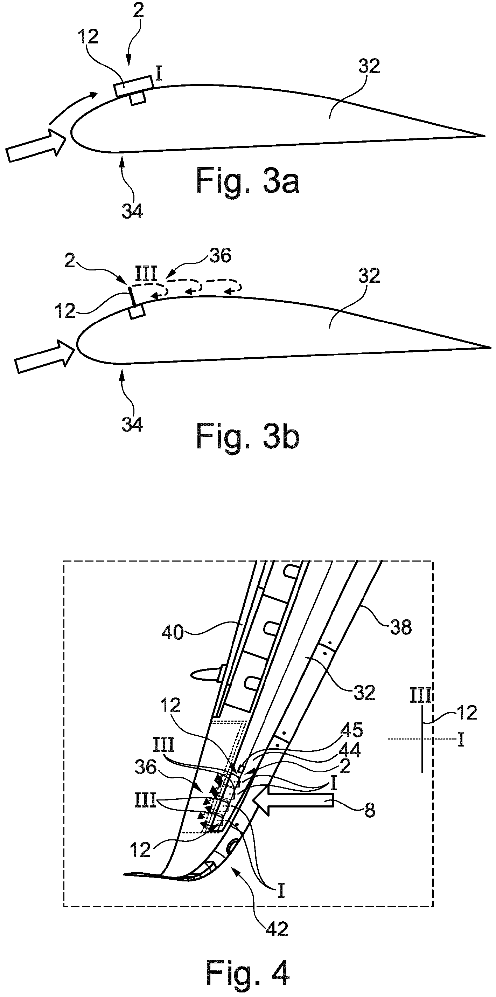

In figs. 3a and 3b a schematic sectional view of an aircraft wing 32 is shown, wherein the assembly 2 is arranged in forward part 34 of the wing 32 on an upper side of the wing 32. However, many other positions are conceivable. In fig. 3a, the vortex generator body 12 of the assembly 2 is in the neutral position, i.e. position I, which resembles the position of minimum impact. Thus, in this state, the flow over the wing 32 is substantially undisturbed. It is conceivable that the control unit 15 or the flight control computer connected to the control unit 15 is capable of actively determining the actual main airflow direction to actively moving the vortex generator body 12 into the actual main airflow direction, which may change depending on the flight conditions.

In fig. 3b, the vortex generator body 12 is in position III, such that it acts as a spoiler. Here, a local flow separation is triggered downstream the vortex generator body 12. For example, this may be provided when flow conditions would arise which would increase a local load on the wing 32 above an allowed value. Also, this position would contribute to an emergency descent capability and steep descent approaches. Still further, this position could be activated on one side of the wing only in order to introduce a rolling moment for enhanced roll control by inducing flow separation at the outer wing.

Fig. 4 shows a top view of the wing 32. Here, an outer part 36 of the wing 32 is shown, which comprises a leading edge 38, a trailing edge 40, a wingtip device 42 and an outboard portion 44 adjacent to the wingtip device 42 in a spanwise direction. Here, exemplarily a plurality of adjustable flow influencing assemblies 2 are shown, with vortex generator bodies 12 in neutral positions I or spoiler positions III. If the vortex generator bodies 12 are moved to position III, locally downstream the vortex generator bodies 12 a flow detachment is triggered, for inducing a rolling moment or for a local load control. Exemplarily, a flow sensor 45 is provided that is capable of determining a local flow condition, which may be fed to a flight control computer and/or to a control unit 15 to move the vortex generator bodies 12 depending on the measured flow condition.

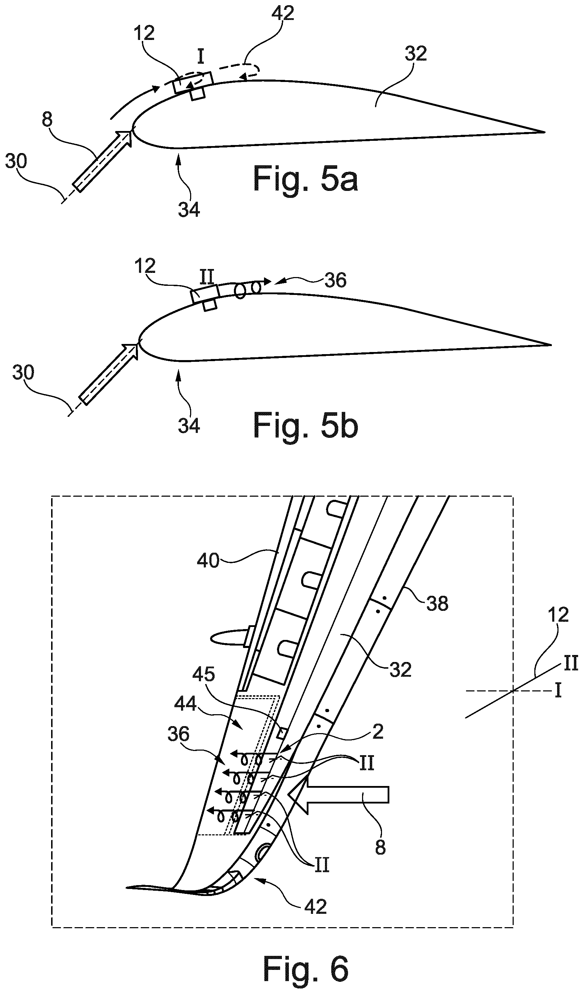

In figs. 5a and 5b, the wing 32 is shown with the main airflow 8 coming from a flow direction 30 that represents a high angle of attack of the wing 32. With the vortex generator body 12 in the neutral position I, as shown in Fig. 5a, the airflow 8 detach in the forward region 34 of the wing 32. This is illustrated by dashed lines presenting a detached flow 42. To delay the flow separation, fig. 5b shows the vortex generator bodies 12 in position II, leading to the creation of vortices 36 that lead to reattaching the flow or delaying the flow separation, respectively.

This is further shown in a top view on the wing 32 illustrated in fig. 6, which is shown in analogy to fig. 4. Here, the vortex generator bodies 12 are shown in the positions II to delay a flow separation in the outboard portion 44.

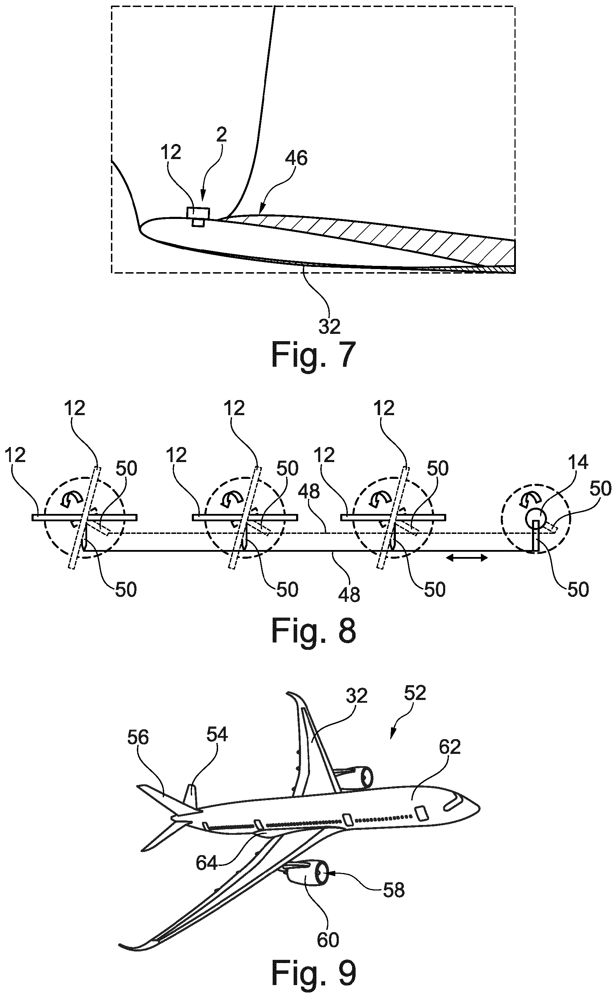

The assembly 2 may also be activated for a buffet control, as shown in fig. 7. Here, a shock induced flow separation 46 is illustrated, which can be attenuated by moving the vortex generator bodies 12 into position II.

Fig. 8 exemplary shows the connection of several vortex generator bodies 12 with a single electric motor 14 through a push rod 48 coupled with the vortex generator bodies 12 through a lever arm 50 each.

Finally, fig. 9 shows an aircraft 52 having wings 32, a horizontal tail plane 54, a vertical tail plane 56, engines 58 surrounded by engine nacelles 60, a fuselage 62 and a belly fairing 64. An assembly 2 according to the above may be placed at any suitable position of the aircraft 52, which may include the fuselage 62, the wings 32, the tail planes 54 and 56, the belly fairing 64, the engine nacelles 60 or any other component that is not explicitly mentioned herein, if it appears to be useful.

### Reference numerals

2 adjustable flow influencing assembly
4 outer skin section
6 external surface
8 airflow
10 internal surface
12 vortex generator body
12a, 12b sections of a vortex generator body
14 positioning device
15 control unit
16 shaft
17 input
18 rotational axis
19 bearing
20 housing
21 magnet
22 constriction
23 magnetic clutch
24 opening
25 spring
26 disk-like body
27 stop member
28 seal
29 endstop
30 main flow direction
32 aircraft wing
34 forward part
36 outer part
38 leading edge
40 trailing edge
42 wingtip device
44 outboard portion
45 flow sensor
46 shock induced flow separation
48 push rod
50 lever arm
52 aircraft
54 horizontal tail plane
56 vertical tail plane
58 engine
60 engine nacelle
62 fuselage
64 belly fairing
I length dimension
w width dimension
α angle
S1 first size/surface area
S2 second size/surface area

## Claims

1. Adjustable flow influencing assembly (2) for an aircraft (52), comprising:
an outer skin section (4) of the aircraft (52), which has an external surface (6) that is in contact with an airflow (8) during operation of the aircraft (52), and an internal surface (10),
at least one vortex generator body (12) having a length (l) and a width (w) dimension, as well as a thickness,
at least one positioning device (14) arranged at the internal surface (10) of the outer skin section (4), preferably comprising an electric motor and a control unit (15), and preferably being adapted to rotate the shaft (16) about 90 degrees at a maximum,
wherein the at least one positioning device (14) comprises a shaft (16) rotatable about a rotational axis (18),
wherein the at least one vortex generator body (12) is arranged on the external surface (6) and is coupled with the shaft (16), such that the rotational axis (18) is substantially parallel to a plane spanned up by the length (l) and width (w) dimension of the at least one vortex generator body (12), wherein the rotational axis (18) is preferably parallel to the width (w) dimension and perpendicular to the length (l) dimension of the at least one vortex generator body (12), and
wherein the at least one positioning device (14) is adapted to rotate and arrest the at least one vortex generator body (12) in a way that the orientation of the at least one vortex generator body (12) relative to a main airflow direction (30) on the exterior skin is selectively adjustable,
wherein the at least one vortex generator body (12) and the at least one positioning device (14) are arranged relative to each other in a way that the rotational axis (18) extends along a division line that divides the at least one vortex generator body (12) into two sections (12a, 12b) along the length (l) dimension and that is parallel to the width (w) dimension,
a) wherein a size (S1) of a first (12a) of the two sections (12a, 12b) differs from a size (S2) of a second (12b) of the two sections (12a, 12b), wherein, before deployment, the section (12a) having the largest size (S1) is to point upstream, whereas the section (12b) having the smallest size (S2) is to point downstream, and/or
b) wherein the at least one vortex generator body (12) and the at least one positioning device (14) are coupled to each other in a way that the size (S1, S2) of the two sections (12a, 12b) can be adjusted, preferably along the length (l) dimension, to allow the size (S1) of the first (12a) of the two sections (12a, 12b) to differ from the size (S2) of the second (12b) of the two sections (12a, 12b).

2. The assembly (2) of claim 1,
wherein the at least one vortex generator body (12) is coupled with the shaft (16) in a way that the at least one vortex generator body (12) can translate with respect to the shaft (16) along the length (l) dimension, such as by means of sliding.

3. The assembly (2) of any of the preceding claims,
a) wherein the size (S1) of the first (12a) of the two sections (12a, 12b) is > 50%, preferably 60% - 80%, of the combined size (S1+S2) of the two sections (12a, 12b) and/or
b) wherein the size (S1) of the first (12a) of the two sections (12a, 12b) can be adjusted, preferably along the length dimension, such that the size (S1) of the first (12a) of the two sections (12a, 12b) is > 50%, preferably 60% - 80%, of the combined size (S1+S2) of the two sections (12a, 12b).

4. The assembly (2) of any of the preceding claims,
wherein the at least one positioning device (14) is adapted to allow the at least one vortex generator body (12) to freely rotate due to aerodynamic forces exerted on the at least one vortex generator body (12) by the airflow (8).

5. The assembly (2) of any of the preceding claims,
wherein the assembly (2) is adapted to move the at least one vortex generator body (12) into a first position (I) corresponding to a neutral position that substantially does not influence the airflow (8), into a second position (II), in which the at least one vortex generator body (12) acts as a vortex generator and into a third position (III), in which the at least one vortex generator body (12) acts as a spoiler,
wherein in the first position (I) the main airflow direction (30) and the at least one vortex generator body (12) enclose an angle (α) of substantially 0°,
wherein in the second position (II) the main airflow direction (30) and the at least one vortex generator body (12) enclose an angle (α) in a range of 15° to 45° and preferably of 20° to 30°, and
wherein in the third position (III) the main airflow direction (30) and the at least one vortex generator body (12) enclose an angle (α) of substantially 90°.

6. The assembly (2) of claims 4 and 5,
wherein the assembly (2) is adapted to allow the at least one vortex generator body (12) to freely rotate from the first position (I) into the second (II) or third position (III) due to the aerodynamic forces exerted on the at least one vortex generator body (12) by the airflow (8).

7. The assembly (2) of any of the preceding claims,
comprising a plurality of vortex generator bodies (12) arranged at a distance to each other, which are couplable with the at least one positioning device (14),
wherein at least one first group of the vortex generator bodies (12) is preferably movable independent from at least one second group of the vortex generator bodies (12).

8. The assembly (2) of any of the preceding claims,
further comprising at least one flow sensor (45) arrangeable on the external surface (6) and couplable with the at least one positioning device (14),
wherein the at least one flow sensor (45) is adapted to measure at least one flow parameter on the external surface (6), and
wherein the at least one positioning device (14) is adapted to move the at least one vortex generator body (12) to influence the airflow upon receiving predetermined sensor data from the at least one flow sensor (45).

9. Method for influencing an airflow on an outer skin section (4) of an aircraft (52), the outer skin section (4) having an external surface (6) and an internal surface (10), wherein at least one vortex generator body (12) is arranged on the external surface (6) and is coupled with a shaft (16) of at least one positioning device (14) arranged at the internal surface (10) of the outer skin section (4) and comprising a rotational axis (18), wherein the rotational axis (18) is substantially parallel to a plane spanned up by a length (l) and width (w) dimension of the at least one vortex generator body (12), the method comprising:
rotating the at least one vortex generator body (12) into a first position (I), in which the at least one vortex generator body (12) is parallel to a main flow direction (30) for temporarily not influencing the flow (8), and
rotating the at least one vortex generator body (12) into at least one other position (II, III), in which the main flow direction (30) and the at least one vortex generator body (12) enclose an angle (α) larger than zero for temporarily influencing the flow (8),
wherein the at least one vortex generator body (12) and the at least one positioning device (14) are arranged relative to each other in a way that the rotational axis (18) extends along a division line that divides the at least one vortex generator body (12) into two sections (12a, 12b) along the length (l) dimension and that is parallel to the width (w) dimension,
a) wherein a size (S1) of a first of the two sections (12a, 12b) differs from a size (S2) of a second of the two sections (12a, 12b), wherein, before deployment, the section (12a) having the largest size (S1) is to point upstream, whereas the section (12b) having the smallest size (S2) is to point downstream, and/or
b) wherein the at least one vortex generator body (12) and the at least one positioning device (14) are coupled to each other in a way that the size (S1, S2) of the two sections (12a, 12b) can be adjusted, preferably along the length (l) dimension, to allow the size (S1) of the first of the two sections (12a, 12b) to differ from the size (S2) of the second of the two sections (12a, 12b),
further comprising adjusting the size of the two sections (12a, 12b), preferably along the length (l) dimension, in a way that the size (S1) of the first of the two sections (12a, 12b) differs from the size (S2) of the second of the two sections (12a, 12b),
preferably further comprising measuring at least one flow parameter on the external surface (6) through at least one flow sensor (45) arranged on the external surface (6), and
moving the at least one vortex generator body (12) to influence the airflow (8) upon receiving predetermined sensor data from the at least one flow sensor (45).

10. The method of claim 9,
wherein the at least one vortex generator body (12) is coupled with the shaft (16) in a way that the at least one vortex generator body (12) can translate with respect to the shaft (16) along the length (l) dimension,
further comprising translating the at least one vortex generator body (12) with respect to the shaft (16) along the length (l) dimension, such as by means of sliding.

11. The method of any of the claims 9 - 10,
a) wherein the size (S1) of the first (12a) of the two sections (12a, 12b) is > 50%, preferably 60% - 80%, of the combined size (S1+S2) of the two sections (12a, 12b) and/or
b) wherein the size (S1, S2) of the two sections (12a, 12b) can be adjusted, preferably along the length (l) dimension, such that the size (S1) of the first (12a) of the two sections (12a, 12b) is > 50%, preferably 60% - 80%, of the combined size (S1+S2) of the two sections (12a, 12b),
further comprising adjusting the size (S1, S2) of the two sections (12a, 12b), preferably along the length (l) dimension, such that the size (S1) of the first (12a) of the two sections (12a, 12b) is > 50%, preferably 60% - 80%, of the combined size (S1+S2) of the two sections (12a, 12b).

12. The method of any one of the claims 9-11,
wherein the at least one positioning device (14) is adapted to allow the at least one vortex generator body (12) to freely rotate due to aerodynamic forces exerted on the at least one vortex generator body (12) by the airflow (8),
further comprising allowing the at least one vortex generator body (12) to freely rotate due to aerodynamic forces exerted on the at least one vortex generator body (12) by the airflow (8).

13. The method of any of the claims 9 - 12,
wherein the at least one other position (II, III) comprises a second position (II), in which the main airflow direction (30) and the at least one vortex generator body (12) enclose an angle (α) in a range of 15° to 45° and preferably of 20° to 30° to let the at least one vortex generator body (12) act as a vortex generator, and
wherein the at least one other position (II, III) comprises a third position (III) in which the main airflow direction (30) and the at least one vortex generator body (12) enclose an angle (α) of substantially 90° to let the at least one vortex generator body (12) act as a spoiler.

14. The method of claims 12 and 13,
wherein the at least one vortex generator body (12) is allowed to freely rotate from the first position (I) into the at least one other position (II, III), such as the third position (III), due to the aerodynamic forces exerted on the at least one vortex generator body (12) by the airflow (8).

15. Aircraft (52), comprising at least one adjustable flow influencing assembly (2) according to any of the claims 1 to 8, wherein the at least one adjustable flow influencing assembly (2) is preferably arranged on at least one position of a group of positions, the group comprising:
- a wing (32) in general,
- a forward region (34) of a wing,
- an outboard portion (44) of a wing,
- a vertical tail plane (56),
- a horizontal tail plane (54),
- a fairing (64),
- an engine nacelle (60), and
- a fuselage (62).
